(19) **Europäisches Patentamt European Patent Office Office européen des brevets**

(11) **EP 3 965 002 B1**

(12) **EUROPEAN PATENT SPECIFICATION**

(45) Date of publication and mention of the grant of the patent:
**16.08.2023 Bulletin 2023/33**

(21) Application number: **20194377.6**

(22) Date of filing: **03.09.2020**

(51) International Patent Classification (IPC):
*G06F 18/2134* (2023.01)   *G06F 18/214* (2023.01)
*G06V 40/16* (2022.01)   *G06V 10/75* (2022.01)
*G06V 10/764* (2022.01)

(52) Cooperative Patent Classification (CPC):
**G06V 10/755; G06V 10/764; G06V 40/171**

(54) **ANISOTROPIC LOSS FUNCTION FOR TRAINING A MODEL TO LOCALISE FEATURE POINTS**

ANISOTROPE VERLUSTFUNKTION ZUM TRAINIEREN EINES MODELLS ZUR LOKALISIERUNG VON MERKMALSPUNKTEN

FONCTION DE PERTE ANISOTROPE POUR FORMER UN MODÈLE À LOCALISER DES POINTS CARACTÉRISTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022 Bulletin 2022/10**

(73) Proprietors:
• **TOYOTA JIDOSHA KABUSHIKI KAISHA Aichi-ken 471-8571 (JP)**
• **The University of Manchester Manchester M13 9PL (GB)**

(72) Inventors:
• **DE WESER, Marleen 1140 Brussels (BE)**

• **COOTES, Tim Oxford Road Manchester M13 9PL (GB)**
• **RAYHAN, Farshid Oxford Road Manchester M13 9PL (GB)**

(74) Representative: **Cabinet Beau de Loménie 158, rue de l'Université 75340 Paris Cedex 07 (FR)**

(56) References cited:
**US-A1- 2007 047 790   US-A1- 2018 046 854
US-A1- 2020 193 211   US-B1- 8 165 354**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to machine learning, and more specifically to the problem of detecting feature points in a sample. The present disclosure is directed to a training method for training a model to localise feature points in a sample, which finds applications in many fields, such as object recognition in images.

TECHNOLOGICAL BACKGROUND

Feature point detection aims to detect key points in a sample. These points generally have specific semantic meaning which makes them remarkable. For instance, in a two-dimensional image of a face, feature points may be facial landmarks, such as an eye corner or nose tip, which provide rich geometric information for tasks such as 3D face reconstruction, face recognition and emotion estimation.

In recent years, feature point detection has been investigated through a wide range of models, including neural network architectures. Although satisfactory results have been obtained, there is still room for increasing the overall accuracy of the models. For instance, US 2007/047790 discloses a method of segmenting anatomic entities in digital medical images, wherein in measuring to what extent the value of a certain point varies from the mean with respect to any of the other points, differences of variables having unequal standard deviations are weighted with the inverse of the standard deviation.

SUMMARY

In this respect, the present disclosure relates to a training method for training a model to localise feature points in a sample, comprising updating the model based on a loss function, wherein the loss function penalises a difference between a predicted value and a target value of at least one of the feature points differently depending on a direction of the difference.

The model may comprise one or more mathematical expressions configured to process the sample in order to output information representative of the feature points in the sample. Weights of the model may be iteratively updated by the training method. The model may comprise an artificial neural network.

For instance, the training method may train the model based on a training data set comprising annotated samples and, for each annotated sample, the model is run to localise feature points on the sample, thus outputting at least one predicted value (possibly at least one predicted value for each feature point). The model may know which feature points are to localise in a predetermined manner; that is, the model may be trained to localise a particular set of points, defined at training time. The at least one predicted value may be compared to a corresponding ground-truth, i.e. a target value which was annotated on the sample and which represents the actual value of the corresponding feature point.

Then, a so-called loss function, or cost function, is used to guide updates to the model so that the predicted values iteratively converge to the respective target values. In conventional training methods, the loss function is mostly based on a difference or distance between the predicted value and the target value: for instance, L1 (sum of absolute differences) and L2 (sum of square differences) loss functions have been used widely. However, the inventors have noticed that the choice of the loss function was particularly important for the performance of the model. On this basis, the present disclosure introduces a loss function which takes into account the direction of the distance between the predicted value and the target value. Thus, the loss function (hereafter anisotropic loss, for the sake of conciseness) penalises a difference between a predicted value and a target value of at least one of the feature points differently depending on the direction of the difference. This enables not only a better overall accuracy of the model, but also a faster training, since convergence of the model weights is improved.

The loss function may be anisotropic, as recited before, for one or more of the feature points. Conversely, for other feature points, the loss function may penalise a difference between a predicted value and a target value regardless of the direction of the difference (i.e. in an isotropic manner).

As an example, the values (e.g. the target value, the predicted value) may be positions of the feature points in the sample, e.g. given in terms of coordinates. Besides, the values may be scalars or vectors. Although the present training method is particularly adapted to models performing shape recognition in images, it can be used for any model that can be trained with a loss function that is distance-based, preferably in an at least two-dimensional space.

In some embodiments, if a base of vectors $(e_i)$ is defined in the vector space in which the samples are defined, and a n-uple of preference weights $(a_i)$ is defined for a given feature point, the loss function L is such that for two vectors $(X,X')$ of the same distance from Z ($\| X\text{-}Z \| = \| X' - Z\|$), if $| (X - Z) . a_i e_i |$ (absolute value of the dot product) is different from $| (X' - Z) . a_i e_i |$, then $L(X) > L(X')$. In other words, as mentioned above, the loss function L is anisotropic.

In some embodiments, said at least one feature point belongs to a boundary between regions of the sample, and the loss function penalises the difference more in a direction away from the boundary than in a direction along the boundary.

A boundary may provide a separation between two regions of the sample having different properties or semantic meanings. Alternatively, a boundary may include a continuous set of points having in common properties or semantic meanings which are different from the surrounding region; the boundary still embodies a division between the regions on either side thereof. For instance, in an N-dimensional sample, the boundary dimension may be N-1, e.g. a line in a 2D sample or a surface in a 3D sample. The boundary may separate the regions of the sample locally or totally. For instance, in a 2D image, a boundary may be an edge, a contour of a shape, of an object, of a shadow, etc.

In these embodiments, it is relied on the fact that features points defined on a boundary are usually more accurately defined in a direction across the boundary than in a direction along the boundary. Therefore, in these embodiments, accuracy and convergence of the model are further improved. The two directions may be perpendicular to each other.

The loss function includes a term $E = \Sigma (x_i-z_i)^T W_i (x_i-z_i)$ where $W_i$ is a weight matrix embodying the weights allotted to the different directions for each point i of said at least one feature point, $x_i$ is the predicted value of point i and $z_i$ is the target value of point i. The weight matrix $W_i$ is different from the identity matrix I (or unit matrix), otherwise the term E would be isotropic.

In some embodiments, the weight matrix $W_i$ is determined based on the directions of the largest and smallest standard deviations of said at least one feature point. Therefore, the weight matrix Wi, and thus the loss function, automatically takes into account the accuracy with which the target value of said feature point is defined.

The weight matrix $W_i$ is defined as $W_i=S_i^{-1}$, where $S_i$ is a co-variance matrix which is representative of an expected spread of errors at point i.

The co-variance matrix $S_i$ is defined as $S_i = a^2uu^T + b^2(I-uu^T)$, where u is a unit vector defining a direction of the sample, $|u|= 1$, I is an identity matrix, $a^2$ is a variance of the target value along direction u and $b^2$ is a variance of the target value along a direction orthogonal to direction u. Coefficients a and b may differ from a point i to another. Besides, for a given point i, a may be greater than b. Of course, this formula may be adapted to greater-dimension vector spaces (in 3 dimensions, we can write $a^2uu^T + b^2vv^T + c^2ww^T$ where u, v, w are orthogonal unit vectors; higher dimensions extend in the same way).

In these embodiments, the penalisation level set of the loss function can be seen as an ellipse centred on the target value, having axes of relative lengths a and b. Thus, a continuous penalisation by the loss function applies in any direction. However, depending on the loss function, continuous penalisation represented by other shapes than ellipses are also encompassed, e.g. rhombi.

In some embodiments, point i belongs to a boundary between regions of the sample, and direction u forms an angle of not more than 45°, preferably not more than 30°, more preferably not more than 20°, more preferably not more than 10°, with a tangent to the boundary at point i. That is, direction u is substantially along the boundary. Direction u may be a tangent, or an approximation of the tangent, to the boundary at point i.

In some embodiments, the model is configured to localise a plurality of feature points in a sample, and the loss function uses different weights for at least two different of the features points. In these embodiments, the loss functions take into account that some feature points are more accurately defined than others, and that each feature point has a different context within the sample. Therefore, the loss function can adapt to the context, which provides a better overall accuracy of the trained model.

In some embodiments, the at least two different of the features points each belong to a boundary between regions of the sample, and the loss function includes a relatively reduced contribution of a feature point belonging to a relatively less curved boundary. In these embodiments, the contributions of less well defined feature points (e.g. less well defined target values) are relatively reduced. For instance, the more curved the boundary, the better defined the target value. Conversely, the less curved the boundary, the more the feature point may slide along the boundary without introducing a big error in the detection. In the extreme, a relatively high contribution can be given to corner points in the loss function, because they are very well defined.

In some embodiments, the model is configured to localise the feature points directly with regression on the sample. The model therefore differs from models configured to search for each point by scanning over a region with a classifier or local regressor, producing probability maps for each point, and then selecting the points having the better score.

In some embodiments, the sample includes an image, e.g. a photo, a picture, a drawing, a chart, etc. The image is a graphical representation that may be two-dimensional (2D) or three-dimensional (3D). 3D or 4D samples, with time or another parameter included as a dimension (e.g. a 2D or 3D video), are also encompassed.

In some embodiments, the feature points include facial landmarks. Facial landmarks may include points belonging to at least one of the following: eye contour, eye corner, iris contour, pupil contour, eyebrow edge, eyebrow end, nasal ridge, nostril contour, nose base contour, nose tip, lip contour, lip end, tongue contour, cheek contour, chin contour, ear contour, ear tip, etc. The face may be a human face or an animal face. In other embodiments, other kinds of landmarks may be used as the feature points, e.g. for object recognition. For instance, for vehicle recognition, the feature points may include points belonging to a bodywork contour, a door knob, a door contour, a wheel contour, a window contour, a headlamp contour, etc.

The present disclosure is further directed to a method for identifying preferential directions for a training method as previously described, comprising detecting a boundary between regions of the sample, determining a first direction substantially along the boundary and a second direction across the boundary, and setting the loss function of the training method to penalise the second direction more than the first direction.

The first direction substantially along the boundary may form, with the boundary, an angle of not more than 45°, preferably not more than 30°, more preferably not more than 20°, more preferably not more than 10°. With such a method, the loss function for training the model may be computed automatically based on an annotated training set comprising the target values of the feature points and the boundaries. The loss function may take the boundary curvature into account, e.g. as previously explained.

The present disclosure is further directed to a computer program including instructions for executing the steps of the training method as previously described when said program is executed by a computer. This program can use any programming language and take the form of source code, object code or a code intermediate between source code and object code, such as a partially compiled form, or any other desirable form.

The present disclosure is further directed to a recording medium readable by a computer and having recorded thereon a computer program including instructions for executing the steps of the training method as previously described. The recording medium can be any entity or device capable of storing the program. For example, the medium can include storage means such as a ROM, for example a CD ROM or a microelectronic circuit ROM, or magnetic storage means, for example a diskette (floppy disk) or a hard disk.

Alternatively, the recording medium can be an integrated circuit in which the program is incorporated, the circuit being adapted to execute the method in question or to be used in its execution.

The present disclosure is further directed to a training method for training a model to localise a plurality of feature points in a sample, comprising updating the model based on a loss function, wherein the loss function uses different weights for at least two different of the features points. The training method may have any of the previously described features.

BRIEF DESCRIPTION OF THE DRAWINGS

The invention and advantages thereof will be better understood upon reading the detailed description which follows, of embodiments given as non-limiting examples. This description refers to the appended drawings, wherein:

- Fig. 1 is a flow chart of a training method according to an embodiment;
- Fig. 2 is an illustration of the principle of an anisotropic loss function according to an embodiment;
- Figs. 3 to 7 show, at increasingly advanced stages of training, a comparison between the respective performances of a model trained with anisotropic loss function according to an embodiment, and a model trained with an isotropic loss function known in the art;
- Figs. 8 to 11 show, at increasingly advanced stages of training, another example of the performances of a model trained with an anisotropic loss function according to an embodiment.

DETAILED DESCRIPTION OF EMBODIMENTS

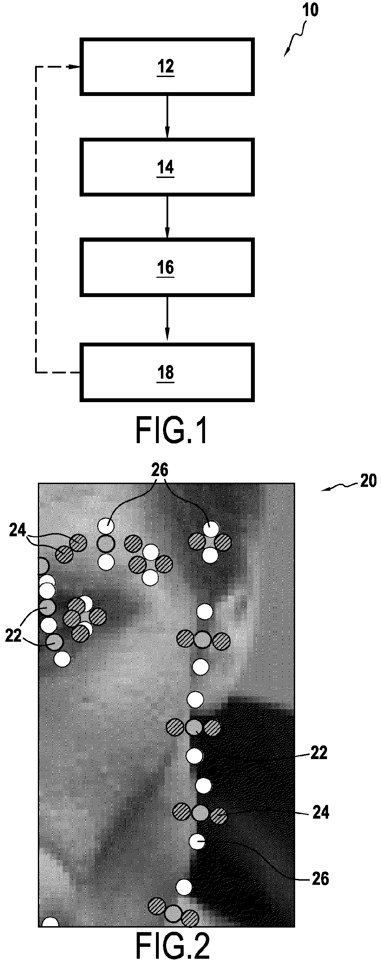

Figure 1 illustrates a training method 10 according to an embodiment, for training a model to localise feature points in a sample.

The training method 10 may comprise a step 12 of providing a training data set to a model configured to localise feature points. The training data set comprises annotated samples, i.e. samples in which ground-truth of the features points to be localised by the model was annotated beforehand (e.g. manually or with another model). In a step 14, the model is run on each sample of the training data set and outputs at least one predicted value of at least one feature point. In a comparison step 16, a loss function compares the predicted value to the target value, i.e. the ground-truth.

As detailed above, the training method comprises an updating step 18 of updating the model based on the loss function.

The embodiment will be further explained with the example of a model comprising an artificial neural network, here a Convolutional Neural Network (CNN), configured to localise facial landmarks (as feature points) in a 2D image (as a sample). However, as detailed above, other kinds of models may be used, e.g. Recurrent Neural Networks (RNN), Auto-Encoder Networks, etc., as well as other types of samples and other feature points.

In addition, the present disclosure addresses an approach in which facial landmark location using CNNs is performed by predicting the point positions directly with regression on the whole face patch, i.e. on the whole sample.

The training method 10 has a specific loss function, as detailed below. It is supposed that n feature points are to be detected, and therefore the model outputs n predicted point position vectors $\{x_i\}$ (corresponding to the so-called predicted values) corresponding to n target points $\{z_i\}$ (corresponding to the so-called target values). With conventional isotropic weights, equal for all points (i.e. all displacements are equally penalised), a loss function comparing them would have the form

$$E = \sum_{i=1}^{n} |x_i - z_i|^2$$

In contrast, in the present embodiment, a co-variance matrix, $S_i$ at each point $\{z_i\}$, indicates the expected spread of errors at each point. Then the loss function in the present embodiment includes a term

$$E = \sum_{i=1}^{n} (x_i - z_i)^T W_i (x_i - z_i)$$

where the weight matrix $W_i$ is defined at each point i as $W_i = S_i^{-1}$. Therefore, $W_i$ is a matrix embodying the weights allotted to the different directions for each point i.

The covariance matrix $S_i$ can be constructed to represent anisotropic distributions, with a variance of $a^2$ along direction u (where $|u|=1$) and $b^2$ along a direction orthogonal to direction u. In this case, it leads to:

$$S_i = a^2 u u^T + b^2 (I - u u^T), \text{ so } W_i = S_i^{-1} = \frac{1}{a^2} u u^T + \frac{1}{b^2} (I - u u^T).$$

When a is greater than b, the weight matrix $W_i$ is anisotropic and the term E of the loss function penalises the difference between the predicted value $x_i$ and the target value $z_i$ more across direction u than along direction u. More generally, the weight matrix $W_i$ may be determined based on the directions of the largest and smallest standard deviations of point i.

Coefficients a and b may be integers or not. Coefficients a and b may be greater than or equal to 1. Coefficient a may vary from 1 to 6. For instance, a=5. Coefficient b may vary from 1 to 5. For instance, b=3. A combination of a=5 and b=3 has shown to provide the best performance for one example of the trained model.

When matching points (i.e. a predicted value to a target value) on curves (in the broad sense, i.e. which may be curved or not), a stronger constraint (thus lower variance) may be required along the direction normal to the curve, compared to that along the curve, because points sliding along the curves are less of a concern to train the model properly. The curve may be a boundary between regions of the sample, for example an eye contour or a cheek edge. Therefore, optionally, when a feature point belongs to a boundary (a curve), the loss function penalises the difference more in a direction away from the boundary than in a direction along the boundary.

To this end, the above direction u may form an angle of not more than 45° with a tangent to the boundary at point i. Alternatively or additionally, the direction u may be an approximation of the tangent to the boundary at point i.

For example, assume that the points $\{z_i\}$ are roughly equally spaced along a boundary. For example, the points $\{z_i\}$ are such that the greatest arc length of the boundary between two consecutive points $\{z_i\}$ is not greater than twice the smallest arc length of the curve between two consecutive points $\{z_i\}$. Then for all points but the end points, the tangent $t_i$ at point i is given approximately by

$$t_i = (z_{i+1} - z_{i-1})/|z_{i+1} - z_{i-1}|$$

At the end points of an open boundary, the following approximation can be used:

$$t_1 = (z_2 - z_1)/|z_2 - z_1| \text{ and } t_n = (z_n - z_{n-1})/|z_n - z_{n-1}|$$

Thus, using the above expression of $W_i$ with $u=t_i$, the weight matrices $W_i$ may be set as

$$W_i = S_i^{-1} = \frac{1}{a^2} t_i t_i^T + \frac{1}{b^2}(I - t_i t_i^T)$$

possibly with a > b, giving more freedom to slide along the boundary than normal to it.

In the above embodiment, detecting a curve is an example of detecting a boundary between regions of the sample. Determining a tangent, or approximation thereof, $t_i$, is an example of determining a first direction substantially along the boundary. Determining a direction orthogonal to the tangent ti is an example of determining a second direction across the boundary. Setting a greater than b is an example of setting the loss function of the training method to penalise the second direction more than the first direction.

The principle of an anisotropic loss function is illustrated in Fig. 2. Figure 2 represents an annotated sample, here a 2D face image 20 in which facial landmarks 22 are shown by solid gray dots. For each facial landmark 22, hatched gray dots 24 represent freedom (hence variance) orthogonal to the boundary and solid white dots 26 represent freedom to slide along the boundary. As shown in Fig. 2, most of the represented landmarks 22 belong to a boundary, e.g. a cheek edge or an eye contour, and for these landmarks, the white dots 26 are farther to the landmarks 22 than the hatched dots 24, which illustrates the anisotropy associated with each feature point target value.

Well-defined landmarks, e.g. at corners, may be well-defined in a plurality of directions. In this case, as shown e.g. at the top-right landmark of Fig. 2, or the eyebrow right end landmark, the difference between the predicted value and the target value may be penalised by the loss function irrespective of the direction of the difference. For instance, for such a point i, the weight matrix may be the identity matrix ($W_i$=I) or the scaled identity matrix ($W_i$=sI, with s a scalar). In the above formula of $W_i$=$S_i$, this would correspond to a=b, as can be checked in Fig. 2 where the hatched gray dots 24 and the solid white dots 26 are equidistant to the corresponding landmark 22.

By defining the weight matrices $W_i$ as above, i.e. identity for the well-defined points and based on the covariance for less-defined points, coefficients $1/a^2$ and $1/b^2$ (a and b greater than or equal to 1) automatically downweight the contribution of the less-defined points in the loss function. Alternatively or in addition, the loss function may include a relatively reduced contribution of a feature point belonging to a relatively less curved boundary, noting that said feature point would be regarded as relatively less-defined. This latter property may be implemented with weight matrices $W_i$ other than those detailed above.

Besides, as also shown in Fig. 2, e.g. when comparing an eye contour landmark to a cheek contour landmark, the loss function may use different weights for at least two different of the landmarks. For instance, the coefficients a and b may vary from a landmark to another.

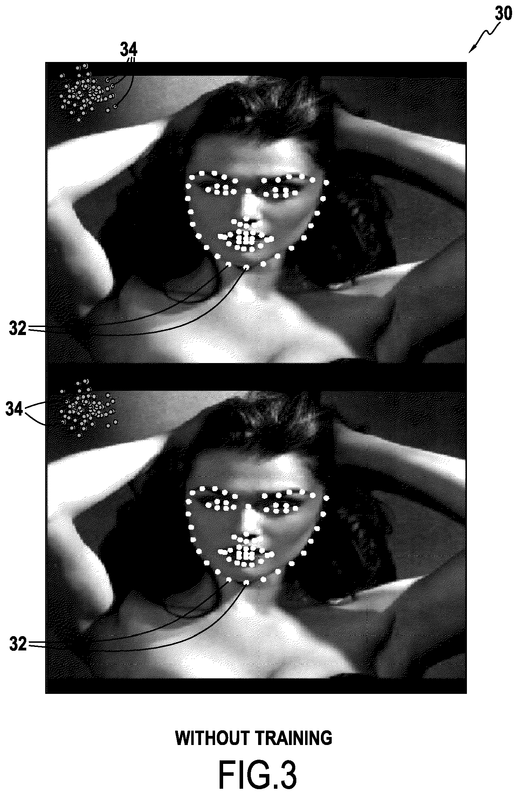

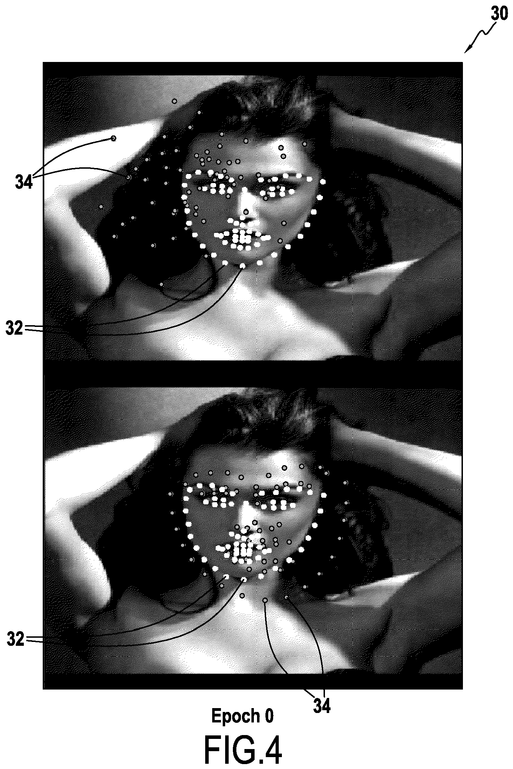

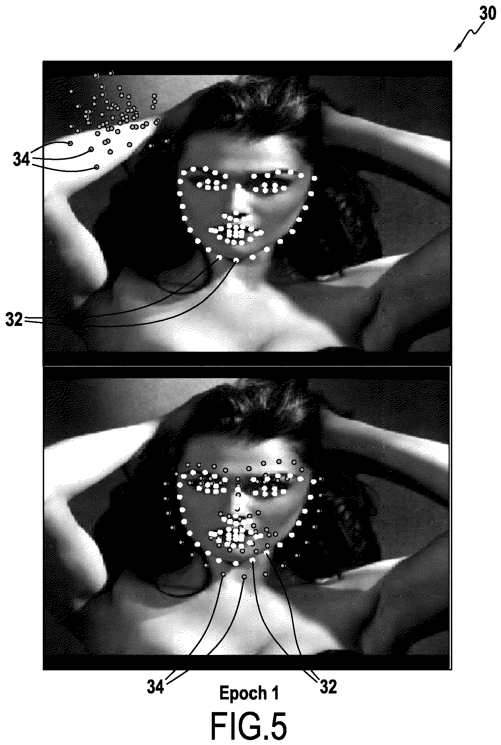

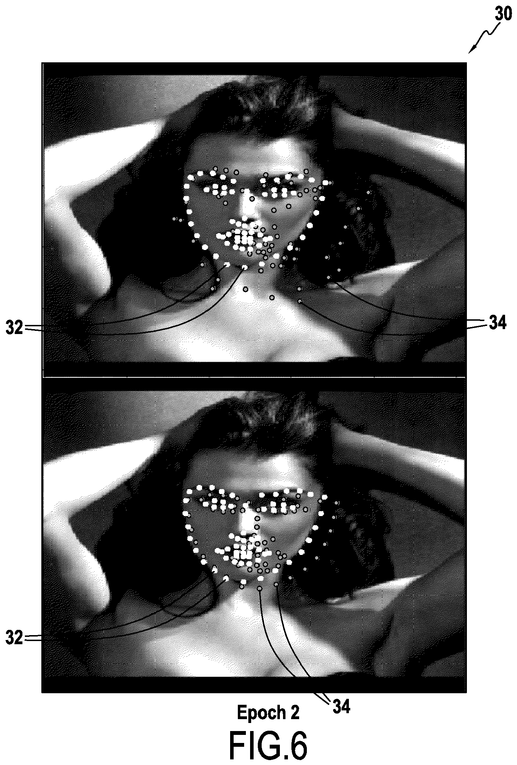

The inventors have found that such an anisotropic loss function leads to more rapid convergence. Figures 3 to 7 display outputs of a ResNet50 model (Kaiming He, Xiangyu Zhang, Shaoqing Ren, and Jian Sun. Deep residual learning for image recognition. In Proceedings of the IEEE conference on computer vision and pattern recognition, pages 770-778, 2016), which is a CNN, after a given number of epochs on the same sample 30, which is an image from the 300W dataset (Christos Sagonas, Georgios Tzimiropoulos, Stefanos Zafeiriou, and Maja Pantic. 300 faces in-the-wild challenge: The first facial landmark localisation challenge. In Proceedings of the IEEE International Conference on Computer Vision Workshops, pages 397-403, 2013.). Epochs are numbered from 0. In the upper parts of Figs. 3 to 7, the model was trained with Wing loss (Zhen-Hua Feng, Josef Kittler, Muhammad Awais, Patrik Huber, and Xiao-Jun Wu. Wing loss for robust facial landmark localisation with convolutional neural networks. In Proceedings of the IEEE Conference on Computer Vision and Pattern Recognition, pages 2235-2245, 2018), whereas in the lower parts of Figs. 3 to 7, the model was trained with the above-described loss function. The white dots 32 are the ground-truths (target values) and gray dots 34 are predictions (predicted values). These figures show that using the above-described loss function, the model has already learned facial shape within a single epoch (see Fig. 4) whereas the model trained with Wing loss gives poor point predictions.

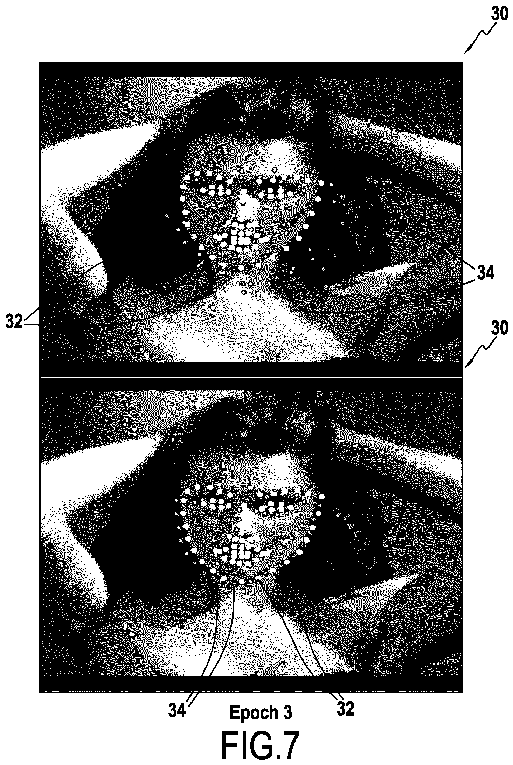

In addition, it can be noticed that without training, both the models trained with Wing Loss and with the above anisotropic loss predict all the landmarks which are on the top left corner. It demonstrates that the above-described loss function converges to good solutions more quickly than the Wing loss. By the fourth epoch (i.e. after epoch 3, see Fig. 7), using the above-described loss function, the network has already found the rough location of each landmarks whereas the network trained using Wing loss is still struggling.

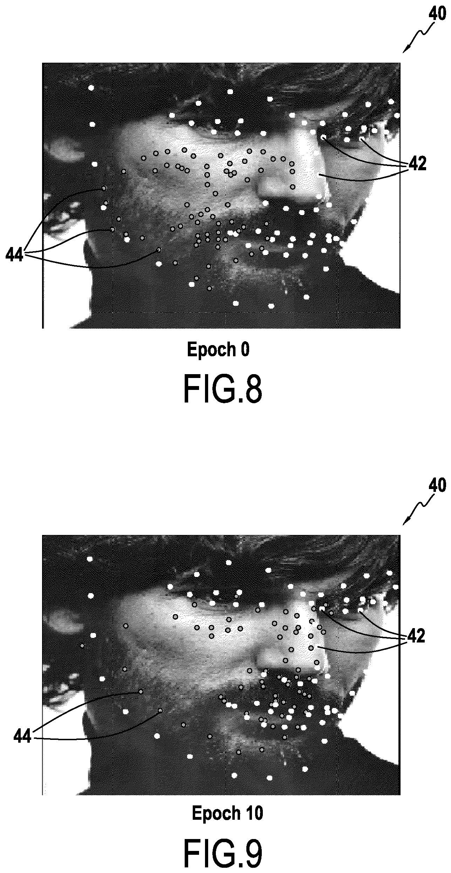

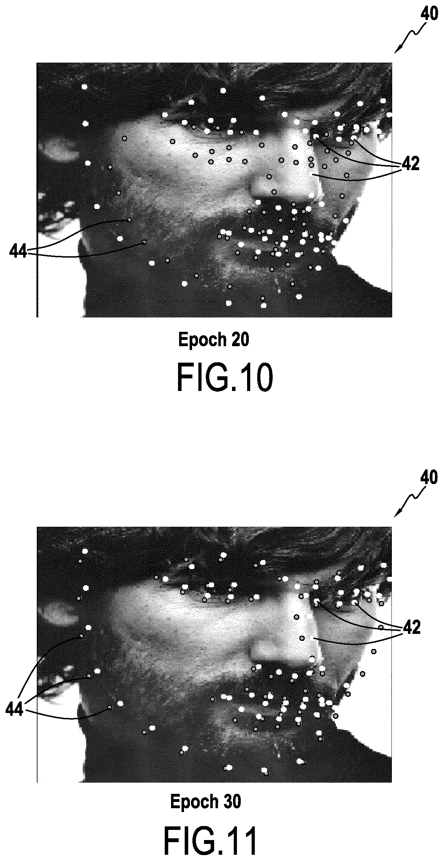

Figures 8 to 11 show similar outputs with another sample 40, which is an image illustrating a side-facing face. Again, the white dots 42 are the ground-truths (target values) and gray dots 44 are predictions (predicted values). Figure 8 shows that after the first epoch the 2D points (predicted values 44) have a front facing face-shape even though the input face on the image is facing a side, however within 30 epochs the predicted values 44 are much more accurate. Following this pattern, the CNN converges after 10000 epochs when trained with the above anisotropic loss.

Similar performance could be obtained by training other models than ResNet50, e.g. other CNNs such as ResNet (Kaiming He, Xiangyu Zhang, Shaoqing Ren, and Jian Sun. Deep residual learning for image recognition. In Proceedings of the IEEE conference on computer vision and pattern recognition, pages 770-778, 2016), DenseNet (Gao Huang, Zhuang Liu, Laurens Van Der Maaten, and Kilian Q Weinberger. Densely connected convolutional networks. In Proceedings of the IEEE conference on computer vision and pattern recognition, pages 4700-4708, 2017), Wide ResNet (Jie Zhang, Meina Kan, Shiguang Shan, and Xilin Chen. Occlusion-free face alignment: Deep regression networks coupled with de-corrupt autoencoders. In Proceedings of the IEEE Conference on Computer Vision and Pattern Recognition, pages 3428-3437, 2016), etc. Therefore, the model to localise feature points in a sample may be selected by the skilled person according to his needs, and not only among facial landmark localisation models.

**Claims**

1. A computer-implemented training method for training a model to localise feature points in a sample (20), comprising updating (18) the model based on a loss function, wherein the loss function penalises a difference between a predicted value and a target value (22) of at least one of the feature points differently depending on a direction of the difference, wherein the loss function includes a term $E = \sum (x_i - z_i)^T W_i (x_i - z_i)$ where $W_i$ is a weight matrix embodying the weights allotted to the different directions for each point i of said at least one feature point, $x_i$ is the predicted value of point i and $z_i$ is the target value of point i, wherein the weight matrix $W_i$ is defined as $W_i = S_i^{-1}$, where $S_i$ is a co-variance matrix which is representative of an expected spread of errors at point i, and wherein the co-variance matrix $S_i$ is defined as $S_i = a^2 uu^T + b^2(I - uu^T)$, where u is a unit vector defining a direction of the sample, $|u| = 1$, I is an identity matrix, $a^2$ is a variance of the target value along direction u and $b^2$ is a variance of the target value along a direction orthogonal to direction u.

2. The training method of claim 1, wherein said at least one feature point (22) belongs to a boundary between regions of the sample, and the loss function penalises the difference more in a direction away from the boundary than in a direction along the boundary.

3. The training method of claim 1 or 2, wherein the weight matrix $W_i$ is determined based on the directions of the largest and smallest standard deviations of said at least one feature point.

4. The training method of any one of claims 1 to 3, wherein point i belongs to a boundary between regions of the sample (20), and direction u forms an angle of not more than 45° with a tangent to the boundary at point i.

5. The training method of any one of claims 1 to 4, wherein the model is configured to localise a plurality of feature points in a sample (20), and the loss function uses different weights for at least two different of the features points.

6. The training method of claim 5, wherein the at least two different of the feature points each belong to a boundary between regions of the sample (20), and the loss function includes a relatively reduced contribution of a feature point belonging to a relatively less curved boundary.

7. The training method of any one of claims 1 to 6, wherein the model is configured to localise the feature points directly with regression on the sample.

8. The training method of any one of claims 1 to 7, wherein the sample (20) includes an image.

9. The training method of any one of claims 1 to 8, wherein the feature points include facial landmarks.

10. A method for identifying preferential directions for a training method according to any one of claims 1 to 9, comprising detecting a boundary between regions of the sample, determining a first direction substantially along the boundary and a second direction across the boundary, and setting the loss function of the training method to penalise the second direction more than the first direction.

11. A computer program including instructions for executing the steps of the training method of any one of claims 1 to 9 when said program is executed by a computer.

12. A recording medium readable by a computer and having recorded thereon a computer program including instructions for executing the steps of the training method of any one of claims 1 to 9.

**EP 3 965 002 B1**

### Patentansprüche

1. Computerimplementiertes Trainingsverfahren zum Trainieren eines Modells zum Lokalisieren von Merkmalspunkten in einer Probe (20), umfassend das Aktualisieren (18) des Modells auf Grundlage einer Verlustfunktion, wobei die Verlustfunktion eine Differenz zwischen einem vorhergesagten Wert und einem Zielwert (22) von mindestens einem der Merkmalspunkte in Abhängigkeit von einer Richtung der Differenz unterschiedlich pönalisiert, wobei die Verlustfunktion einen Term $E = \Sigma (x_i\text{-}z_i)^T W_i (x_i\text{-}z_i)$ beinhaltet, wobei $W_i$ eine Gewichtsmatrix ist, welche die den unterschiedlichen Richtungen zugewiesenen Gewichte für jeden Punkt i des zumindest einen Merkmalspunkts verkörpert, $x_i$ der vorhergesagte Wert für den Punkt i ist und $z_i$ der Zielwert für den Punkt i ist, wobei die Gewichtsmatrix $W_i$ definiert ist als $W_i = S_i^{-1}$, wobei $S_i$ eine Kovarianz-Matrix ist, die eine erwartete Spreizung von Fehlern an dem Punkt i darstellt, und wobei die Kovarianz-Matrix $S_i$ definiert ist als $S_i = a^2 uu^T + b^2(I\text{-}uu^T)$, wobei u ein Einheitsvektor ist, der eine Richtung der Probe definiert, $|u| = 1$, I eine Identitätsmatrix ist, $a^2$ eine Varianz des Zielwerts entlang der Richtung u ist und $b^2$ eine Varianz des Zielwerts entlang einer Richtung orthogonal zu der Richtung u ist.

2. Trainingsverfahren nach Anspruch 1, wobei der zumindest eine Merkmalspunkt (22) zu einer Grenze zwischen Regionen der Probe gehört, und die Verlustfunktion die Differenz stärker in einer Richtung von der Grenze weg pönalisiert als in einer Richtung entlang der Grenze.

3. Trainingsverfahren nach Anspruch 1 oder 2, wobei die Gewichtsmatrix $W_i$ auf Grundlage der Richtungen der größten und kleinsten Standardabweichungen des zumindest einen Merkmalspunkts bestimmt wird.

4. Trainingsverfahren nach einem der Ansprüche 1 bis 3, wobei der Punkt i zu einer Grenze zwischen Regionen der Probe (20) gehört, und die Richtung u einen Winkel von nicht mehr als 45° mit einer Tangente zu der Grenze an dem Punkt i bildet.

5. Trainingsverfahren nach einem der Ansprüche 1 bis 4, wobei das Modell dazu ausgestaltet ist, eine Vielzahl von Merkmalspunkten in einer Probe (20) zu lokalisieren, und die Verlustfunktion unterschiedliche Gewichte für zumindest zwei unterschiedliche der Merkmalspunkte verwendet.

6. Trainingsverfahren nach Anspruch 5, wobei die zumindest zwei unterschiedlichen der Merkmalspunkte jeweils zu einer Grenze zwischen Regionen der Probe (20) gehören, und die Verlustfunktion einen relativ verringerten Beitrag eines Merkmalspunkts beinhaltet, der zu einer relativ weniger gekrümmten Grenze gehört.

7. Trainingsverfahren nach einem der Ansprüche 1 bis 6, wobei das Modell dazu ausgestaltet ist, die Merkmalspunkte an der Probe direkt mit Regression zu lokalisieren.

8. Trainingsverfahren nach einem der Ansprüche 1 bis 7, wobei die Probe (20) ein Bild beinhaltet.

9. Trainingsverfahren nach einem der Ansprüche 1 bis 8, wobei die Merkmalspunkte Gesichts-Orientierungspunkte beinhalten.

10. Verfahren zum Identifizieren von bevorzugten Richtungen für ein Trainingsverfahren nach einem der Ansprüche 1 bis 9, umfassend das Erkennen einer Grenze zwischen Regionen der Probe, das Bestimmen einer ersten Richtung im Wesentlichen entlang der Grenze und einer zweiten Richtung quer über die Grenze, und das Einstellen der Verlustfunktion des Trainingsverfahrens auf eine Weise, dass sie die zweite Richtung stärker als die erste Richtung pönalisiert.

11. Computerprogramm, das Anweisungen zum Ausführen der Schritte des Trainingsverfahrens nach einem der Ansprüche 1 bis 9 beinhaltet, wenn das Programm durch einen Computer ausgeführt wird.

12. Aufzeichnungsmedium, das von einem Computer gelesen werden kann und auf welchem ein Computerprogramm aufgezeichnet ist, das Anweisungen zum Ausführen der Schritte des Trainingsverfahrens nach einem der Ansprüche 1 bis 9 beinhaltet.

### Revendications

1. Procédé d'entraînement mis en œuvre par ordinateur pour entraîner un modèle à localiser des points caractéristiques dans un échantillon (20), comprenant une mise à jour (18) du modèle sur la base d'une fonction de perte, la fonction de perte pénalisant une différence entre une valeur prédite et une valeur de cible (22) d'au moins un des points caractéristiques de manière différente en fonction d'une direction de la différence, la fonction de perte comprenant un terme $E = \Sigma(x_i-z_i)^T W_i(x_i-z_i)$ où $W_i$ est une matrice de poids incorporant les poids alloués aux différentes directions pour chaque point i dudit au moins un point caractéristique, $x_i$ est la valeur prédite du point i et $z_i$ est la valeur de cible du point i, la matrice de poids $W_i$ étant définie comme $W_i=S_i^{-1}$, où $S_i$ est une matrice de covariance qui est représentative d'une dispersion attendue d'erreurs au point i, et la matrice de covariance $S_i$ étant définie comme $S_i = a^2uu^T +b^2(I-uu^T)$, où u est un vecteur unitaire définissant une direction de l'échantillon, |u|=1, I est une matrice identité, $a^2$ est une variance de la valeur de cible le long de la direction u et $b^2$ est une variance de la valeur de cible le long d'une direction orthogonale à la direction u.

2. Procédé d'entraînement selon la revendication 1, selon lequel ledit au moins un point caractéristique (22) appartient à une limite entre des zones de l'échantillon, et la fonction de perte pénalise davantage la différence dans une direction à l'écart de la limite que dans une direction le long de la limite.

3. Procédé d'entraînement selon la revendication 1 ou 2, selon lequel la matrice de poids Wi est déterminée sur la base des directions des plus grands et plus petits écarts-type dudit au moins un point caractéristique.

4. Procédé d'entraînement selon l'une quelconque des revendications 1 à 3, selon lequel un point i appartient à une limite entre des zones de l'échantillon (20), et une direction u forme un angle de pas plus de 45° avec une tangente à la limite au point i.

5. Procédé d'entraînement selon l'une quelconque des revendications 1 à 4, selon lequel le modèle est configuré pour localiser une pluralité de points caractéristiques dans un échantillon (20), et la fonction de perte utilise différents poids pour au moins deux différents des points caractéristiques.

6. Procédé d'entraînement selon la revendication 5, selon lequel les au moins deux différents des points caractéristiques appartiennent chacun à une limite entre des zones de l'échantillon (20), et la fonction de perte comprend une contribution relativement réduite d'un point caractéristique appartenant à une limite relativement moins incurvée.

7. Procédé d'entraînement selon l'une quelconque des revendications 1 à 6, selon lequel le modèle est configuré pour localiser les points caractéristiques directement avec une régression sur l'échantillon.

8. Procédé d'entraînement selon l'une quelconque des revendications 1 à 7, selon lequel l'échantillon (20) comprend une image.

9. Procédé d'entraînement selon l'une quelconque des revendications 1 à 8, selon lequel les points caractéristiques comprennent des points de repère faciaux.

10. Procédé d'identification de directions préférentielles pour un procédé d'entraînement selon l'une quelconque des revendications 1 à 9, comprenant le fait de détecter une limite entre des zones de l'échantillon, déterminer une première direction sensiblement le long de la limite et une deuxième direction à travers la limite, et établir la fonction de perte du procédé d'entraînement pour pénaliser davantage la deuxième direction que la première direction.

11. Programme informatique comprenant des instructions pour exécuter les étapes du procédé d'entraînement selon l'une quelconque des revendications 1 à 9 quand ledit programme est exécuté par un ordinateur.

12. Support d'enregistrement lisible par un ordinateur et ayant enregistré dessus un programme informatique comprenant des instructions pour exécuter les étapes du procédé d'entraînement selon l'une quelconque des revendications 1 à 9

FIG.1

FIG.2

**WITHOUT TRAINING**

# FIG.3

Epoch 0

# FIG.4

FIG.5

Epoch 2

FIG.6

Epoch 3

FIG.7

**Epoch 0**

# FIG.8

**Epoch 10**

# FIG.9

**Epoch 20**

# FIG.10

**Epoch 30**

# FIG.11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007047790 A

**Non-patent literature cited in the description**

- **KAIMING HE ; XIANGYU ZHANG ; SHAOQING REN ; JIAN SUN.** Deep residual learning for image recognition. *Proceedings of the IEEE conference on computer vision and pattern recognition,* 2016, 770-778
- **CHRISTOS SAGONAS ; GEORGIOS TZIMIROPOULOS ; STEFANOS ZAFEIRIOU ; MAJA PANTIC.** 300 faces in-the-wild challenge: The first facial landmark localisation challenge. *Proceedings of the IEEE International Conference on Computer Vision Workshops,* 2013, 397-403
- **ZHEN-HUA FENG ; JOSEF KITTLER ; MUHAMMAD AWAIS ; PATRIK HUBER ; XIAO-JUN WU.** Wing loss for robust facial landmark localisation with convolutional neural networks. *Proceedings of the IEEE Conference on Computer Vision and Pattern Recognition,* 2018, 2235-2245
- **GAO HUANG ; ZHUANG LIU ; LAURENS VAN DER MAATEN ; KILIAN Q WEINBERGER.** Densely connected convolutional networks. *Proceedings of the IEEE conference on computer vision and pattern recognition,* 2017, 4700-4708
- **JIE ZHANG ; MEINA KAN ; SHIGUANG SHAN ; XI-LIN CHEN.** Occlusion-free face alignment: Deep regression networks coupled with de-corrupt autoencoders. *Proceedings of the IEEE Conference on Computer Vision and Pattern Recognition,* 2016, 3428-3437